(19) Europäisches Patentamt
European Patent Office
Office européen des brevets

(11) Numéro de publication: **0 214 026 B1**

(12) **FASCICULE DE BREVET EUROPEEN**

(45) Date de publication du fascicule du brevet: **23.05.90**

(51) Int. Cl.⁵: **H01F 1/34**

(21) Numéro de dépôt: **86401756.1**

(22) Date de dépôt: **05.08.86**

(54) **Matériau magnétique stable en température pour utilisation en hyperfréquences et son procédé de fabrication.**

(30) Priorité: **06.08.85 FR 8512035**

(43) Date de publication de la demande:
**11.03.87 Bulletin 87/11**

(45) Mention de la délivrance du brevet:
**23.05.90 Bulletin 90/21**

(84) Etats contractants désignés:
**DE GB IT NL SE**

(56) Documents cités:
**EP-A- 0 040 118**
**FR-A- 2 177 632**
**GB-A- 1 270 663**

(73) Titulaire: **THOMSON-CSF, 51, Esplanade du Général de Gaulle, F-92800 Puteaux(FR)**

(72) Inventeur: **Warin, Dominique, THOMSON-CSF SCPI 19, avenue de Messine, F-75008 Paris(FR)**
Inventeur: **Vives, Evelyne, THOMSON-CSF SCPI 19, avenue de Messine, F-75008 Paris(FR)**

(74) Mandataire: **Lepercque, Jean et al, THOMSON-CSF SCPI, F-92045 PARIS LA DEFENSE CEDEX 67(FR)**

**EP 0 214 026 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'objet de l'invention est un nouveau matériau magnétique destiné à être utilisé en hyperfréquences, à des fréquences voisines de 3 GHz (bande S) avec de très grandes puissances moyennes et de crête.

Les matériaux magnétiques les plus utilisés actuellement dans la fabrication des dispositifs hyperfréquences sont dérivés, soit du grenat d'yttrium, soit des spinelles de nickel, de manganèse ou de lithium. La première caractéristique à prendre en compte pour ces matériaux ferrites est le moment magnétique à saturation $M_S$. Pour un fonctionnement optimal à fréquence f, le matériau doit posséder dans la plupart des cas un moment défini par la relation suivante:

$$0{,}4\omega \leqq \gamma . M_S \leqq 0{,}7\omega$$

$\gamma$ étant le rapport gyromagnétique et $\omega$ la pulsation.

Par ailleurs, les utilisateurs prennent en considération les principales caractéristiques suivantes :

- les caractéristiques diélectriques $\varepsilon'$, $tg\delta_\varepsilon$, les pertes diélectriques $tg\delta$ devant être inférieures à $5.10^{-4}$;
- la variation de l'aimantation $M_S$ en fonction de la température. Elle est caractérisée par un coefficient défini plus loin ;
- la valeur de la largeur de raie de gyrorésonance $\Delta H$, qui caractérise les pertes magnétiques à la résonance et à son voisinage;
- la valeur de la largeur de raie effective $\Delta H_{eff}$, qui caractérise les pertes magnétiques loin de la résonance,
- la valeur de la largeur de raie d'ondes de spin $\Delta H_k$, lorsque le matériau doit être soumis à une puissance hyperfréquence élevée.

Jusqu'à présent, les matériaux utilisés dans les dispositifs fonctionnant à très forte puissance hyperfréquence dans la bande des 3 GHz étaient les ferrites spinelles de nickel-aluminium, avec un faible dopage au cobalt pour améliorer la tenue en puissance. Ces ferrites présentent deux inconvénients majeurs:

- ils sont difficiles à synthétiser et leurs caractéristiques ne sont pas reproductibles du fait que les ions aluminium et fer se répartissent entre les deux sites cristallographiques octaédriques et tétraédriques du réseau spinelle d'une manière très sensible aux conditions de préparation et difficilement contrôlable,
- ils présentent une largeur de raie $\Delta$ H assez importante, généralement supérieure à 20 kA/m. De plus, pour obtenir une valeur de l'aimantation compatible avec un fonctionnement en bande S($46 \leqq M_S \leqq 52$kA/m), la concentration nécessaire en aluminium est importante et fait tomber la température de Curie à seulement 120°C, ce qui entraîne un coefficient de stabilité en température très défavorable ; $\alpha \geqq 5.10^{-3}$/°C pour une gamme de température comprise entre - 20 et + 60 °C. Ces matériaux sont donc inutilisables dans des dispositifs fonctionnant sous forte contrainte thermique en impulsions de puissance longues. La destruction de ce type de ferrite a d'ailleurs déjà pu être constatée dans ces conditions d'utilisation sévères. Les précautions nécessaires à leur utilisation s'avèrent très contraignantes (refroidissement indispensable) empêchant le développement de systèmes fonctionnant en impulsions longues.

GB-A 1 270 663 decrit des grenats d'yttrium, qui peuvent aussi comprendre les éléments Ca, Gd, Jn, V et Fe pour des applications microélectroniques.

En dépit de ces inconvénients, ces matériaux sont utilisés dans les dispositifs à très haute puissance pulsée en impulsions brèves inférieures à 10 µs, car ce sont les seuls ferrites de l'art connu antérieurs à l'invention à présenter un champ magnétique hyperfréquence de seuil pour les effets non linéaires $h_c$ suffisamment élevé correspondant à une largeur de raie d'onde de spin ($\Delta H_k$ = 2,4 kA/m à 9 gHz) pour supporter ces puissances sans pertes magnétiques supplémentaires. Ils sont insuffisants si l'on envisage des applications à puissances encore plus élevées.

Afin de pallier ces inconvénients, l'invention propose un ferrite fonctionnant à très forte puissance pulsée (puissance de crête environ 1 MW pour un temps d'impulsion de l'ordre de 100 µs) et ayant une largeur d'ondes de spin $\Delta H_k$ la plus élevée possible ($\Delta H_k$ > 2,4kA/m à 9 GHz) avec une largeur de raie de gyrorésonance $\Delta H$ faible ($\Delta H$ < 16 kA/m à 9 GHz). L'utilistion en puissance élevée entraînant également des contraintes thermiques sévères au niveau du matériau, la variation de l'aimantation du ferrite avec la température doit donc être minimale ($\alpha < 2.10^{-3}$ /°C et la température de Curie $T_c \geqq 180$°C). Ces nouveaux matériaux ont une tenue en puissance crête au moins aussi bonne que celle des ferrites de nickel-aluminium avec une nette amélioration de toutes leurs autres caractéristiques et en particulier la tenue en température.

L'invention a donc pour objet un matériau magnétique stable en température constitué par un ferrite de structure grenat, caractérisé en ce qu'il a pour composition chimique globale la formule suivante :

$$Y_{0,5}Ca_{1,1}Gd_{1,40-w}Dy_wIn_{0,4}V_{0,55}Fe_{4,05}O_{12}$$

avec 0,01 < w < 0,1.

Le taux de dysprosium rend le matériau particulièrement efficace lorsqu'il est compris entre 0,05 et 0,07.

De plus, les caractéristiques électriques du matériau sont sensibles à la dimension des cristallites qui le composent. Les meilleurs résultats sont obtenus pour des cristallites de taille moyenne au plus égale à 4 µm.

Le procédé de fabrication de tels matériaux comporte au moins les étapes suivantes :

- mélange de poudres d'oxydes de fer, d'yttrium, de gadolinium, d'indium, de vanadium, de dysprosium et de carbonate de calcium dans les proportions désirées,
- broyage du mélange en milieu liquide, puis séchage et tamisage,
- traitement thermique à une température comprise entre 1000 et 1200 °C pendant 4 heures,
-nouveau broyage du mélange en milieu liquide suivi d'un séchage et d'un tamisage, avec apport d'un liant,
- pressage pour obtenir les matériaux désirés,
- frittage sous oxygène à une température comprise entre 1250 °C et 1300 °C.

L'invention sera mieux comprise et d'autres avantages apparaîtront au moyen de la description qui va suivre et des figures annexées parmi lesquelles :

- la figure 1 est un diagramme donnant la variation de l'aimantation en fonction de la température pour un ferrite de l'art connu et un ferrite de l'invention,
- la figure 2 est un diagramme donnant les niveaux de puissances admissibles pour des ferrites selon l'invention.

On va d'abord définir les notations qui seront employées par la suit :

- $M_s$ est l'aimantation à saturation en kA/m, mesurée à la température ambiante (voisine de 20°C),
- $\alpha$ ($t_A$, $t_B$ est le coefficient de variation de $M_s$ avec la température entre les températures $t_A$ et $t_B$, il est défini par la formule :

$$\alpha(t_A, t_B) = \frac{1}{t_B - t_A} \cdot \frac{M_{s\,max} - M_{s\,min}}{M_s}$$

dans laquelle $M_s$ max désigne la valeur maximale de l'aimantation dans l'intervalle ($t_A$, $t_B$) et $M_{smin}$ la valeur minimale de l'aimantation dans le même intervalle, $m_s$ étant la valeur à la température ambiante (20°C), l'intervalle de température étant choisi entre $t_A$ = -20°C et $t_B$ = 60°C, lorsqu'aucune indication sur cet intervalle de température n'est donnée,

-$T_c$ est la température de Curie exprimée en degrés Celcius,
- $\varepsilon'$ est la partie réelle de la constante diélectrique,
- $tg\delta_\varepsilon$ est la tangente de l'angle de pertes diélectriques mesurée à la fréquence de 8,2 GHz sur un barreau d'environ 1 mm de diamètre, - $\Delta H$ en kA/m est la largeur de raie de résonance gyromagnétique mesurée à 3 GHz et à 9 GHz sur une sphère d'environ 1 mm de diamètre,
- $\Delta H_{eff}$ en kA/m est la largeur de raie effective à 9 GHz, elle caractérise les pertes résiduelles magnétiques hors résonance,
- $\Delta H_k$ en kA/m est la largeur de raie d'ondes de spin. Elle est proportionnelle à l'amplitude du champ critique hyperfréquence $h_c$ au-delà duquel existent des pertes magnétiques supplémentaires par effet non linéaire. $\Delta H_k$ est mesurée à 3 GHz sur une sphère d'environ 1 cm de diamètre, et à 9 GHz sur une sphère d'environ 3 mm de diamètre dans une cavité résonante.

Le matériau selon l'invention fonctionnant à 3 GHz, son aimantation doit être comprise entre 46 et 52 kA/m pour obtenir une efficacité satisfaisante. Sa composition chimique est donc la suivante : $Y_{0,5}Ca_{1,1}Gd_{1,40-w}Dy_wIn_{0,4}V_{0,55}Fe_{4,05}O_{12}$.

Il fait partie d'une famille de grenats d'yttrium substitués avec cinq types d'ions différents. La variation de la concentration w en dysprosium permet, selon l'invention, d'optimiser le compromis entre les valeurs de la largeur de raie H et les possibilités de tenue à haut niveau de puissance due à la valeur de $H_k$ selon l'application visée ici.

Les matériaux sont obtenus de la manière suivante : les matières premières ont une pureté voisine de 99,5 % (oxyde de fer, oxyde d'yttrium, oxyde de gadolinium, oxyde d'indium, oxyde de vanadium, carbonate de calcium, oxyde de dysprosium). Ces matières premières sont pesées selon la formule générale dans laquelle on choisit w comme on le verra plus loin. On pratique un défaut de fer pour tenir compte de l'apport de fer consécutif aux deux broyages prévus dans le cycle de préparation suivant les procédés de l'art connu. Lors des pesées on tient également compte des pertes au feu des différentes matières premières. Le mélange ainsi dosé est alors broyé en milieu liquide, séché puis tamisé. La poudre obtenue est ensuite "chamottée", c'est-à-dire traitée thermiquement à une température comprise entre 1000 et 1200°C pendant 4 heures, le chamottage ayant pour but de former la phase grenat. Le produit est à nouveau broyé, séché et tamisé. Des agents liants et lubrifiants sont apportés au cours de ces étapes. On

procède ensuite à une mise en forme par compactage de la poudre sous une pression d'environ 1,6 tonne par $cm^2$. Les échantillons subissent alors un traitement thermique sous oxygène à une température dite de frittage comprise entre 1250 et 1300°C. Un léger défaut de fer par rapport à la stoechiométrie (0 à 1 %) ainsi qu'un ajustement de la température de chamottage dans la fourchette indiquée ci-dessus permettent de minimiser les pertes diélectriques du matériau fritté afin d'obtenir tg $\delta < 5.10^{-4}$. Les valeurs exactes de ces deux paramètres sont trouvées sans difficulté par l'homme de l'art. Elles peuvent dépendre légèrement des matières premières utilisées.

Ces conditions étant fixées, on obtient des matériaux qui pour $0,01 \leqq w \leqq 0,1$ ont les propriétés qui vont être décrites.

Tous ces matériaux ont une aimantation $M_S$ à température ambiante comprise entre 46 et 52 kA/m, ce qui les rend utilisables en hyperfréquence en bande S (au voisinage de 3 GHz). Pour l'un d'entre eux, la courbe d'aimantation en fonction de la température est donnée sur le diagramme de la figure 1 (courbe 1). Sur ce diagramme, on a également tracé la courbe analogue pour un ferrite classique de nickel-aluminium (courbe 2). L'axe des ordonnées du diagramme de la figure 1 représente l'aimantation $M_S$ en kA/m et l'axe des abscisses représente la température T exprimée en °C.

La courbe 1 a été tracée pour un grenat selon l'invention et pour lequel w = 0,07. A 20°C, l'aimantation $M_S$ vaut 50 kA/m. Sa température de Curie est de 190°C et son coefficient de stabilité, obtenu entre -20°C et + 60 °C est inférieur à $1,8.10^{-3}$/°C. Ce grenat présente de faibles pertes diélectriques (tg $\delta < 5.10^{-4}$) avec une constante $\varepsilon'$ de l'ordre de 14. Les largeurs de raies effectives (hors résonance) et les largeurs de raie de gyrorésonance sont respectivement de l'ordre de 4 kA/m et inférieures à 8 kA/m. Selon l'invention, la bonne tenue en puissance est favorisée par une granulométrie fine de la céramique (diamètre moyen des cristallites < 4µm). Le taux de dysprosium permet de régler le rapport entre les largeurs de raie à la résonance $\Delta H$ et les largeurs de raie $\Delta H_K$ comprises entre 0,6 et 4,8 kA/m selon l'application visée. C'est ce que montre le tableau 1 placé en fin de description.

D'après ce tableau, le largeurs de raie de gyrorésonance à 3 et 9GHz ainsi que les largeurs de raie d'ondes de spin aux mêmes fréquences augmentent avec le taux de dysprosium w.Les valeurs de w égales à 0,05 et 0,07 donnent des résultats particulièrement satisfaisants puisque, pour 9 GHz, ils ont : $\Delta H_K > 2,4$ kA/m et $\Delta H < 16$ kA/m. C'est donc pour $0,05 \leqq w \leqq 0,07$ que l'on aura les meilleurs résultats.

L'avantage du grenat selon l'invention est nettement visible en comparaison du ferrite de nickel-aluminium selon l'art connu de formule non révélée et commercialisé selon la référence TRANSTECH 2113 et dont la variation d'aimantation $M_S$ en fonction de la température T est représentée par la courbe 2 dans le diagramme de la figure 1.

Le tableau 2, placé en fin de description, regroupe les principales caractéristiques pour deux grenats selon l'invention pour lesquels w vaut 0,07 et 0,05 et pour le ferrite de nickel-aluminium cité plus haut. On constate, d'après ce tableau, que pratiquement toutes les caractéristiques des grenats selon l'invention sont nettement améliorées par rapport au ferrite d l'art connu.

La figure 2 est un diagramme montrant les niveaux de puissances admissibles pour le matériau selon l'invention en fonction du taux de dysprosium w et du niveau de pertes magnétiques $\Delta H$. L'axe des ordonnées représente $\Delta H_K$ à 3 GHz et l'axe des abscisses, $\Delta H$ à la même fréquence. Les points qui apparaissent sur ce diagramme sont fonction de la valeur de w. Ce diagramme reprend en fait, sous une forme plus expressive, les valeurs qui apparaissent dans les trois premières colonnes du tableau 1 et permet de choisir le paramètre w suivant l'application envisagée à plus ou moins grande puissance.

Les matériaux selon l'invention se distinguent nettement de matériaux de la même famille et comportant sept types d'ions (outre les ions oxygène). C'est ce que montre l'étude des propriétés de grenats de composition générale :

$Y_{3-2x-z}Ca_{2x}Gd_{2-w}Dy_wFe_{5-x-y}In_yV_xO_{12}$.

Les données du tableau 3, placé en fin de description, indiquent que des variations de concentration des ions substituants par rapport aux valeurs de l'invention aboutissent à des matériaux nettement moins performants. En effet, on cherche à avoir des matériaux ayant les caractéristiques suivantes :

- $46 \leqq M_S \leqq 52$ kA/m,
- $\Delta H_K > 2,4$ kA/m à 9 GHz,
- $\Delta H < 16$ kA/m à 9 GHz,
- $\alpha < 2.10^{-3}$/°C,
- $T_C \geqq 180$°C.

Ainsi seul le choix de ces ions avec les proportions exactes ou très voisines de celles données par l'invention permet d'aboutir à un ensemble de caractéristiques exceptionnelles.

De même, les conditions de préparation sont également très critiques et permettent d'aboutir au matériau souhaité. Le procédé de fabrication permet d'obtenir en effet un matériau à grain très fin, les cristallites ayant des tailles moyennes ≦ 4 µm et ceci contribue en combinaison avec le choix de la composition à réaliser la tenue en puissance crête souhaité tout en ayant des largeurs de raie H faibles.

Le matériau selon l'invention correspondant à w = 0,07 a permis, par exemple, la réalisation d'un circulateur de puissance fonctionnant dans la bande 2,85 - 3,3 GHz. La puissance crête traversant le dispositif est de 1 MW avec une puissance moyenne de 40 kW, en impulsions de 90 µs. Des essais comparatifs avec des ferrites de nickel ont indiqué que seul le nouveau grenat permet le fonctionnement correct du dispositif avec un faible niveau de pertes d'insertion inférieur à 0,3 dB et un découplage entre 2 voies adjacentes supérieur à 20 dB. Le grenat selon l'invention absorbe efficacement les contraintes thermiques imposées par des impulsions dix à cent fois plus longues qu'habituellement, au contraire des ferrites usuels dont l'échauffement peut se traduire par un éclatement.

Le matériau selon l'invention possède un comportement remarquable et supérieur à ceux de l'art connu en ce qui concerne à la fois la stabilité de l'aimantation et la largeur de raie d'onde de spin pour une utilisation en bande S en très forte puissance pulsée. Le matériau a de très faibles pertes diélectriques et une largeur de raie ΔH assez faible en même temps qu'une valeur élevée de $\Delta H_K$, ce qui est exceptionnel et inhabituel et permet d'obtenir des dispositifs à très faibles pertes d'insertion. Il en résulte un échauffement moindre à puissance traversée égale, ce qui est encore un facteur favorable à deux points de vue : conception et fabrication facilitées d'une part, meilleures performances d'autre part.

**Tableau 1**
**Influence du taux de dysprosium w.**

| w | ΔH(3 GHz) kA/m | $\Delta H_K$ (3 GHz) kA/m | ΔH(9 GHz) kA/m | $\Delta H_K$ (9 GHz) kA7M |
|---|---|---|---|---|
| 0 | 2,9 | 0,6 | 4,0 | 1,3 |
| 0,01 | 3,5 | 0,8 | 4,2 | 1,4 |
| 0,03 | 4,2 | 1,1 | 7,8 | 2,1 |
| 0,05 | 4,8 | 1,4 | 9,4 | 2,5 |
| 0,07 | 6,0 | 2,4 | 13,9 | >4,0 |
| 0,10 | 6,0 | >2,8 | 17,5 | >4,0 |

**Tableau 2**
**Comparaison de matériaux suivant l'invention avec un ferrite classique de nickel-aluminium**

| | $M_s$ kA/m | $T_c$ °C | α /°C | ΔH(9 GHz) kA/m | ΔH(3 GHz) kA/m | $\Delta H_K$(9 GHz) kA/m | $\Delta H_K$(3 GHz) kA/m | $\Delta H_{eff}$ kA/m | ε' | tg δ |
|---|---|---|---|---|---|---|---|---|---|---|
| w = 0,07 | 50 | 190 | $1,6.10^{-3}$ | 13,9 | 6 | >4 | 2,4 | 3,9 | 14 | $<5.10^{-4}$ |
| w = 0,05 | 51,1 | 180 | $1,7.10^{-3}$ | 10 | 4,8 | >4 | 1,4 | – | 14,3 | $<5.10^{-4}$ |
| Fe Ni Al | 40,6 | 120 | $5,6.10^{-3}$ | 11,9 | 8 | 2,4 | 1,9 | 2,8 | 9 | $<8.10^{-4}$ |

**Tableau 3**
**Caractéristiques des matériaux $Y_{3-2x-z}\,Ca_{2x}\,Gd_{2-w}\,Dy_w\,Fe_{5-x-y}\,In_y\,V_x\,O_{12}$**

| Matériau | x | y | z | w | $M_s$ kA/m | $\alpha.10^3$ /°C | $T_c$ °C | ΔH(9 GHz) kA/m | $\Delta H_K$ (9 GHz) kA/m |
|---|---|---|---|---|---|---|---|---|---|
| 1 | 0,95 | 0,40 | 0 | 0 | 55,8 | 3,8 | 170 | 2,4 | 0,16 |
| 2 | 0,88 | 0,40 | 0 | 0 | 51,8 | 3,8 | 170 | 2,0 | 0,16 |
| 3 | 0,60 | 0,50 | 1,80 | 0 | 39,8 | 1,3 | 170 | 6,0 | 1,43 |
| 4 | 0,60 | 0,60 | 1,40 | 0 | 49,4 | 3,1 | 140 | 2,4 | 1,60 |
| 5 | 0,75 | 0,45 | 1,00 | 0 | 43,8 | 2,3 | 160 | 4,0 | 0,80 |

## Revendications

1. Matériau magnétique stable en température pour utilisation en hyperfréquences constitué par un ferrite de structure granat, caractérisé en ce qu'il a pour composition chimique globale la formule suivante :

$$Y_{0,5}Ca_{1,1}Gd_{1,40-w}Dy_wIn_{0,4}V_{0,55}Fe_{4,05}O_{12}$$

avec $0,01 \leq w \leq 0,1$.

2. Matériau magnétique selon la revendication 1, caractérisé en ce que le taux de dysprosium est : $0,05 < w < 0,07$.

3. Matériau magnétique selon l'une des revendications 1 ou 2, caractérisé en ce que la taille moyenne des cristallites qui le composent est inférieure ou égale à 4μm.

4. Procédé de fabrication d'un matériau magnétique selon l'une quelconque des revendications 1 à 3, caractérisé en ce qu'il comporte au moins les étapes suivantes :

- mélange de poudres d'oxydes de fer, d'yttrium, de gadolinium, d'indium, de vanadium, de dysprosium et de carbonate de calcium dans les proportions désirées,

- broyage du mélange en milieu liquide, puis séchage et tamisage,
- traitement thermique à une température comprise entre 1000 et 1200 °C pendant 4 heures,
- nouveau broyage du mélange en milieu liquide suivi d'un séchage et d'un tamisage, avec apport d'un liant,
- pressage pour obtenir les matériaux désirés,
- frittage sous oxygène à une température comprise entre 1250°C et 1300°C.

## Claims

1. A thermally stable magnetic material for use at microwave frequencies, constituted by a ferrite with a garnet structure, characterized in that its empirical chemical formula is as follows:

$$Y_{0.5}Ca_{1.1}Gd_{1.40-w}Dy_wIn_{0.4}V_{0.55}Fe_{4.05}O_{12}$$

wherein $0.01 \leq w \leq 0.1$.

2. The magnetic material as claimed in claim 1, characterized in that the amount of dysprosium is such that $0.05 < w < 0.07$.

3. The magnetic material as claimed in claim 1 or claim 2, characterized in that the mean size of the crystallites of which it is composed is equal to or less than 4 µm.

4. A method for the manufacture of a magnetic material as claimed in any one of claims 1 through 3, characterized in that it comprises at least the following steps:
– the mixing of powders of oxides of iron, of yttrium, of gadolinium, of indium, of vanadium, of dysprosium and of calcium carbonate in the desired proportions,
– the comminution of the mixture in a liquid environment, then drying and screening,
– thermal treatment at a temperature comprised between 1000 and 1200°C for 4 hours,
– renewed comminution of the mixture in a liquid environment followed by drying and screening, with the addition of a binding agent,
– pressing to obtain the desired materials,
– sintering under oxygen at a temperature comprised between 1250°C and 1300°C.

## Patentansprüche

1. Temperaturstabiles magnetisches Material für Ultrahochfrequenz-Anwendungen, bestehend aus einem Ferrit mit Granatstruktur, gekennzeichnet durch eine globale chemische Zusammensetzung, die der folgenden Formel entspricht:

$$Y_{0,5}Ca_{1,1}Gd_{1,40-w}Dy_wIn_{0,4}V_{0,55}Fe_{4,05}O_{12}$$

mit $0,01 \leq w \leq 0,1$.

2. Magnetisches Material nach Anspruch 1, dadurch gekennzeichnet, daß der Dysprosium-Anteil $0,05 < w < 0,07$ ist.

3. Magnetisches Material nach einem der Ansprüche 1 oder 2, dadurch gekennzeichnet, daß die mittlere Größe der das Material bildenden Kristallite kleiner oder gleich 4 µm ist.

4. Verfahren zur Herstellung eines magnetischen Materials gemäß einem der Ansprüche 1 bis 3, dadurch gekennzeichnet, daß es mindestens die folgenden Schritte umfaßt:
– Vermischen von pulverförmigen Oxiden des Eisens, Yttriums, Gadoliniums, Indiums, Vanadiums, Dysprosiums und von Calciumcarbonat in den gewünschten Verhältnissen,
– Vermahlen des Gemisches in flüssigem Medium, dann Trocknung und Siebung,
– Wärmebehandlung bei einer Temperatur zwischen 1000 und 1200°C während 4 Stunden,
– erneutes Vermahlen des Gemisches in flüssigem Medium, gefolgt von einer Trocknung und einer Siebung, unter Zugabe eines Bindemittels,
– Verpressen, um die gewünschten Materialien zu erhalten,
– Sintern unter Sauerstoff bei einer Temperatur zwischen 1250°C und 1300°C.

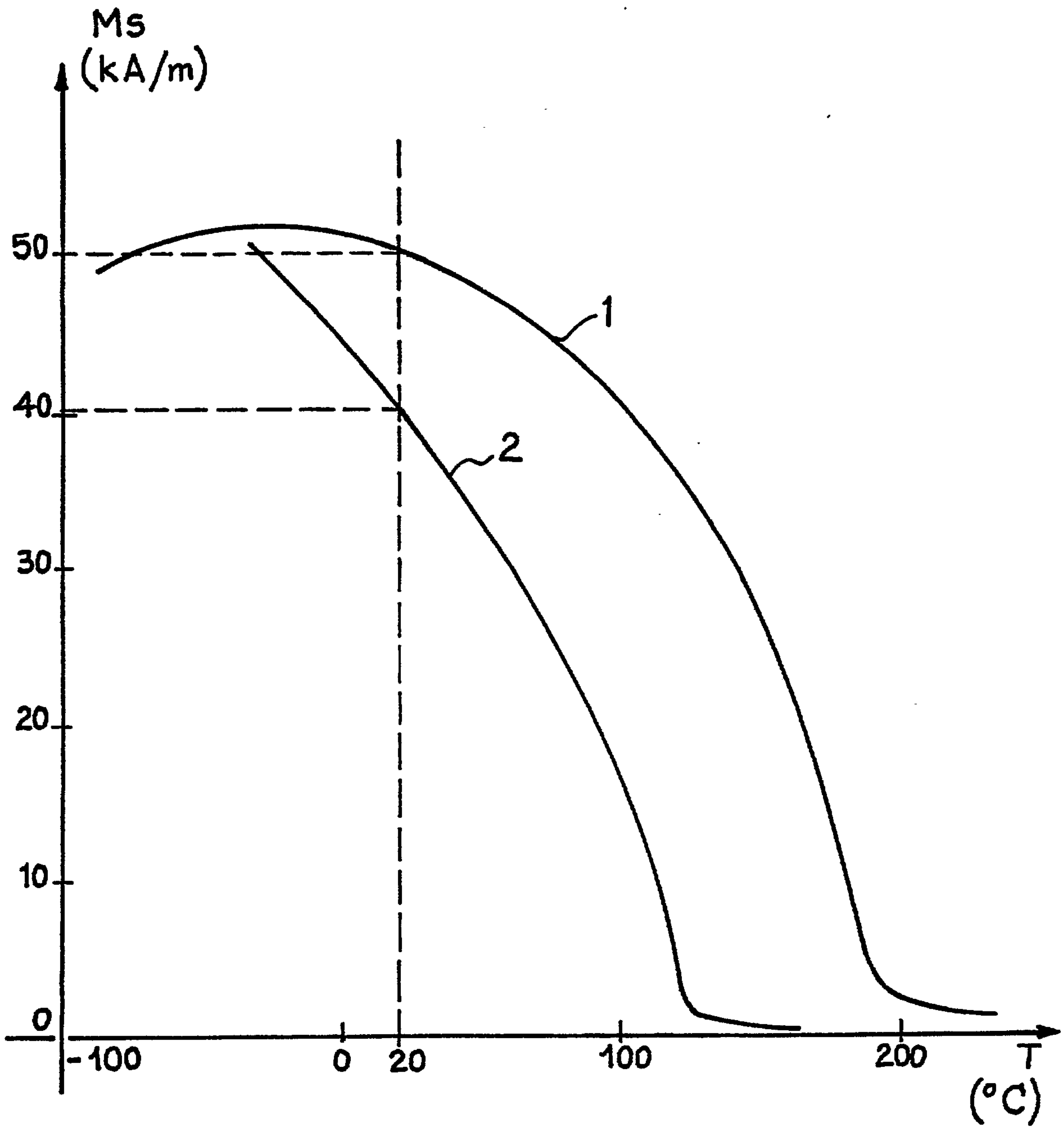


Fig.1

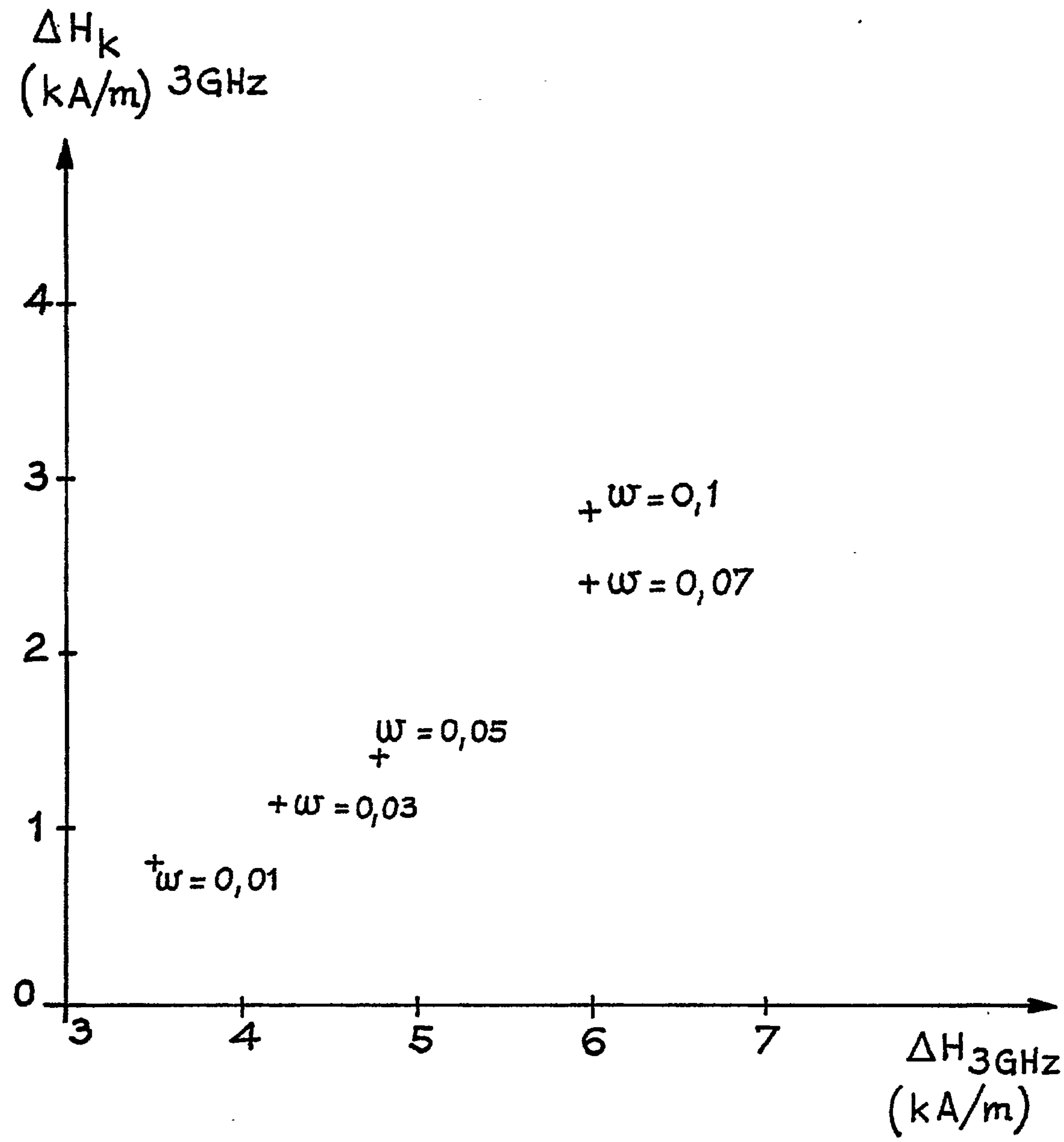


Fig.2